# EUROPÄISCHE PATENTSCHRIFT

(11) **EP 0 331 922 B1**
(45) Veröffentlichungstag und Bekanntmachung des Hinweises auf die Patenterteilung: **04.08.1993**
(21) Anmeldenummer: 89102275.8
(22) Anmeldetag: 10.02.1989
(51) Int. Cl.: F24H 9/20

(54) **Heizgerät**
Heater
Chaudière

(30) Priorität: 07.03.1988 DE 3807397
(43) Veröffentlichungstag der Anmeldung: 13.09.1989
(73) Patentinhaber: Webasto AG Fahrzeugtechnik, D-82131 Stockdorf (DE)
(72) Erfinder: Riedmaier, Josef, D-8131 Pentenried (DE); Widemann, Friedrich, D-8000 München 60 (DE); Schmatelka, Bernhard, D-8000 München 83 (DE)

(56) Entgegenhaltungen:
- CH-A- 419 863
- DE-A- 2 453 202

## Beschreibung

Die Erfindung befaßt sich mit Fahrzeugzusatzheizgeräten, welche mit flüssigem Wärmeträger arbeiten, der einen Zwischenraum zwischen einem Wärmeübertrager und einem mantelförmigen Außengehäuse durchströmt.

In DE-A 24 30 046 ist ein Fahrzeugzusatzheizgerät angegeben, welches mit einem gasförmigen Wärmeträger, wie Luft, arbeitet. Hierbei ist ein über die Außenkontur des Außengehäuses des Heizgeräts vorstehender Raum vorgesehen, der mittels eines Deckels verschließbar ist. In diesem Raum, der mit der Saugseite des Brennluftgebläses in Verbindung steht, ist u.a. eine Zündeinrichtung, wie eine Glühkerze o. dgl. angeordnet, und in dem Raum kann ein Steuergerät oder eine Steuereinrichtung aufgenommen sein. Zur Vermeidung des Übertritts von Abgasen bei undichter Zündkerze in den Fahrgastraum ist der Raum um die Zündkerze nach außen hin, d.h. zum Fahrzeuginnenraum hin, abgedichtet und steht mit dem Ansaugraum des Brennluftgebläses in Verbindung, um diese Abgase aus dem Raum abzusaugen und dem Brenner wiederum als Brennluft zuzuleiten. Das Steuergerät weist üblicherweise ein dicht geschlossenes Gehäuse auf, in dem die Schaltungen, wie Schaltungsplatinen oder gedruckte Schaltungsplatten untergebracht sind. Die Ein- und Ausgänge des Steuergeräts bzw. der Steuereinrichtung sind durch das Gehäuse durchgeführt und zur Herstellung der erforderlichen elektrischen Verbindungen mit Hilfe von Steckkontakten und elektrischen Leitungen zugänglich, die dann an den jeweils anzusteuernden Funktionsteilen, wie Brennluftgebläse, Zündeinrichtung, Flammwächter o. dgl. angeschlossen sind. Hierzu sind meist in Isolierschläuchen verlegte Einzelleitungen erforderlich, wobei beim Anschließen Verwechselungen unter den anzuschließenden Einzelleitungen vorkommen können. Auch ist das Anschließen hierbei aufwendig und zeitraubend, so daß sich die Montage für die elektrischen Einrichtungen insgesamt gesehen verkompliziert. Auch neigen derartige elektrische Verbindungen mit Hilfe von Steckerteilen und Leitungen zu sogenannten Wackelkontakten, bei denen eine ungenügende elektrische Anschlußverbindung vorhanden ist, so daß es zu Störungen bei der Steuerung des Heizgeräts durch die Steuereinrichtung kommen kann.

Der vorliegenden Erfindung liegt die Aufgabe zugrunde, ein mit einem flüssigen Wärmeträger arbeitendes Fahrzeugzusatzheizgerät bereitzustellen, bei welchem eine Steuereinrichtung auf vereinfachte Weise mit möglichst kurzen elektrischen Verbindungsleitungen weitgehend funktionsstörungsfrei arbeitend vorgesehen werden kann. Diese Aufgabe wird mit der im Patentanspruch 1 angegebenen Ausführungsform des Fahrzeugzusatzheizgeräts gelöst.

Bei diesem erfindungsgemäßen Heizgerät wird daher keine separat in einem Gehäuse untergebrachte Steuereinrichtung vorgesehen, sondern die Platinen, die die Schaltungen der Steuereinrichtung enthalten, und die Sensorelemente werden unmittelbar in dem vom mantelförmigen Außengehäuse gebildeten Aufnahmeraum untergebracht, so daß die Steuereinrichtung in das Heizgerät integriert ist und direkt mit dem Heizgerät körperlich verbunden ist. Hierdurch vereinfacht sich die Montage eines solchen Heizgeräts, da Leitungsverbindungen vom Steuergerät zum Heizgerät entfallen, und zudem kein gesonderter Platz zur Unterbringung der Steuereinrichtung, wie eines Steuergeräts, benötigt wird, sondern das Heizgerät zusammen mit der Steuereinrichtung eine kompakte Einheit bildet. Hierbei lassen sich auch Einbaukosten beim Einbau in ein Fahrzeug verringern.

Um Funktionsstörungen der Steuereinrichtung zu vermeiden, die auf Verlustwärme von Leistungs-Halbleiterbauelementen der Steuereinrichtung verursacht werden können, sind die Leistungs-Halbleiterbauelemente der Steuereinrichtung vorzugsweise in unmittelbarem Wärmekontakt mit einer Wand des Aufnahmeraums. Hierbei wird die Wand des Aufnahmeraums zur Abfuhr der Verlustwärme dieser Leistungs-Halbleiterbauelemente verwendet, so daß sich der Innenraum, in dem die Platinen der Steuereinrichtung usw. angeordnet sind, beim Arbeiten der Steuereinrichtung nicht aufwärmen kann, sondern diese elektronischen Leistungs-Halbleiterbauelemente effektiv gekühlt werden. Zweckmäßigerweise sind die Leistungs-Halbleiterbauelemente an Seitenwänden des Aufnahmeraums angeordnet, die von der Grundfläche des mantelförmigen Außengehäuses hochstehen, so daß eine ungehinderte Abfuhr der Verlustwärme der Leistungs-Halbleiterbauelemente möglich ist.

Die Sensorelemente der Steuereinrichtung, wie ein Temperaturfühler für den flüssigen Wärmeträger, eine Temperatursicherung o. dgl. sind am vom mantelförmigen Außengehäuse gebildeten Boden des Aufnahmeraums angeordnet. Hierdurch vereinfacht sich durch die spezielle Anordnung der Sensorelemente der konstruktive Bauaufwand für die Anordnung derselben und zudem können relativ lange Leitungsverbindungen zu diesen Sensorelementen entfallen. Somit erhält man eine gedrängte Bauweise des Heizgeräts mit Steuereinrichtung und Sensoren. Auch wird die Betriebszuverlässigkeit hierdurch verbessert, da Störungsursachen vermieden werden, die in Verbindung mit Leitungsverbindungen und/oder Steckverbindungen unvermeidbar auftreten können.

Um im Bedarfsfall eine Überprüfung der Steuereinrichtung in dem Aufnahmeraum vornehmen zu können, ohne die Teile derselben insgesamt auseinandernehmen zu müssen, ist vorzugsweise zum Zwecke des leichten Zugangs die Oberseite des Aufnahmeraums mittels eines abnehmbaren Deckels dicht abgeschlossen. Zu Reparatur- und/oder Servicezwecken kann dann der Deckel abgenommen werden und die Teile der Steuereinrichtung können hinsichtlich ihrer Funktionsfähigkeit überprüft werden. Durch den dichten Abschluß des Deckels wird vermieden, daß Umgebungseinflüsse zu nachteiligen Auswirkungen hinsichtlich der Funktionsfähigkeit der Steuereinrichtung führen.

Zweckmäßigerweise sind die Ein- und Ausgänge der Steuereinrichtung auf einer Seite des Aufnahmeraums zusammengefaßt, so daß sich die mit der Steuereinrichtung zu verbindenden elektrischen Anschlüsse auf vereinfachte Weise ausgestalten lassen. Auch können hierdurch Einbaufehler beim Einbau der Platinen der Steuereinrichtung vermieden werden.

Gemäß einem weiteren wesentlichen Aspekt nach der Erfindung zeichnet sich ein Heizgerät der gattungsgemäßen Art dadurch aus, daß eine elektrische Verbindungseinrichtung vorgesehen ist, die die Ein- und Ausgänge der Steuereinrichtung mit den jeweils anzusteuernden Funktionsteilen und/oder mit dem Fahrzeug verbindet. Bei dieser Auslegung des Heizgeräts werden die Leitungsverbindungen mit Hilfe der elektrischen Verbindungseinrichtung zusammengefaßt, um die Anzahl von einzelnen Verbindungsleitungen und die hiermit auftretenden Schwierigkeiten zu reduzieren. Auch wird der Montageaufwand herabgesetzt und es können Anschlußfehler, insbesondere aufgrund von Verwechselungen, wirksam vermieden werden.

Vorzugsweise weist die Verbindungseinrichtung einen steckerähnlichen Grundkörper auf, der entsprechende elektrische Leiter- und Kontaktteile enthält. Diese elektrischen Leiter- und Kontaktteile stellen vorzugsweise eine unmittelbare Verbindung von Ein- und Ausgängen der Steuereinrichtung und den anzusteuernden Funktionsteilen her, so daß störungsanfällige Steckverbindungen vermieden werden. Ferner können in einem Arbeitsgang der Kontaktschluß des Heizgeräts mit dem Fahrzeug und der Kontaktschluß mit den jeweiligen wesentlichen Funktionsteilen des Heizgeräts sowie mit der Steuereinrichtung derart hergestellt werden, daß man möglichst kurze Leitungsverbindungswege hat, die wesentlich weniger störungsempfindlich sind.

Vorzugsweise werden die elektrischen Leiter- und Kontaktteile von Metallteilen gebildet, wobei diese in dem steckerähnlichen Grundkörper der elektrischen Verbindungseinrichtung eingelegt sind, der vorzugsweise aus Kunststoff besteht.

Um im Bedarfsfall leicht und schnell einen Zugang, insbesondere zum Zwecke der Überprüfung, zu den elektrischen Leiter- und Kontaktteilen zu haben, ist die elektrische Verbindungseinrichtung zweiteilig ausgelegt, und auf dem steckerähnlichen Grundkörper ist ein Deckel dicht schliessend abnehmbar befestigt. Auf diese Weise sind die elektrischen Kontaktteile in der elektrischen Verbindungseinrichtung beispielsweise für Meßzwecke leicht zugänglich, ohne daß die elektrischen Verbindungen aufgetrennt werden müssen. Ferner sind die elektrischen Verbindungselemente bei der elektrischen Verbindungseinrichtung nach der Erfindung gegen mechanische Einwirkungen und nachteilige Einflüsse durch Umgebungsbedingungen wirksam geschützt untergebracht. Hierdurch läßt sich die Betriebszuverlässigkeit eines solchen Heizgeräts wesentlich steigern.

Gemäß einer vorteilhaften weiteren Ausgestaltung nach der Erfindung ist die elektrische Verbindungseinrichtung in Achsrichtung des Heizgeräts gesehen neben dem Aufnahmeraum für die Steuereinrichtung angeordnet und vorzugsweise schließt die elektrische Verbindungseinrichtung unmittelbar an diesen Aufnahmeraum an. Bei einer derartigen Ausgestaltungsform kann über die elektrischen Leiter- und Kontaktteile ohne die Verwendung von Einzelleitungsverbindungen ein direkter Kontaktschluß mit den Ein- und Ausgängen der Steuereinrichtung hergestellt werden. Die zum Fahrzeug führende Verbindung der elektrischen Verbindungseinrichtung geht von dieser an einer zentralen Stelle ab. Die elektrische Verbindungseinrichtung nach der Erfindung kann auch eine direkte Steckverbindung mit Funktionsteilen, wie der Zündeinrichtung und/oder dem Flammwächter bilden. Somit können auch in diesem Fall störungsanfällige Leitungsverbindungen vermieden werden. Zugleich wird hierdurch der deckelähnliche Grundkörper der elektrischen Verbindungseinrichtung an einer vorbestimmten Stelle am mantelförmigen Außengehäuse fixiert.

Gemäß einer zweckmäßigen Ausgestaltungsform nach der Erfindung verschließt die elektrische Verbindungseinrichtung zugleich eine zur Brennkammer des Heizgeräts führende Zugangsöffnung. Somit wird zugleich mit der Herstellung der elektrischen Verbindung mit Hilfe der elektrischen Verbindungseinrichtung auch eine zu Montage- und Wartungszwecken benötigte Zugangsöffnung zur Brennkammer verschlossen.

Ferner kann nach der Erfindung die elektrische Verbindungseinrichtung so ausgelegt werden, daß Sicherungen, gegebenenfalls eine Reservesicherung und/oder elektrische Bauteile, wie ein Relais zur Ansteuerung externer Einrichtungen, wie ein Fahrzeuggebläse o.dgl., aufgenommen werden können.

Somit können bisher erforderliche zusätzliche Einrichtungen zur Ansteuerung externer Einrichtungen entfallen, und sie werden in der elektrischen Verbindungseinrichtung auf übersichtliche Weise zusammengefaßt.

Die Erfindung wird nachstehend an Beispielen unter Bezugnahme auf die beigefügte Zeichnung näher erläutert. Darin zeigt:
- Fig. 1: eine Ausschnittsansicht als Draufsicht auf ein nach der Erfindung ausgelegtes Heizgerät,
- Fig. 2: eine Fig. 1 entsprechende Seitenansicht in Teilschnittdarstellung des Heizgeräts, und
- Fig. 3: eine schematische Ansicht zur Verdeutlichung von Einzelheiten der elektrischen Verbindungseinrichtung und der Steuereinrichtung bei einem solchen Heizgerät.

In den Figuren der Zeichnung sind gleiche oder ähnliche Teile mit denselben Bezugszeichen versehen.

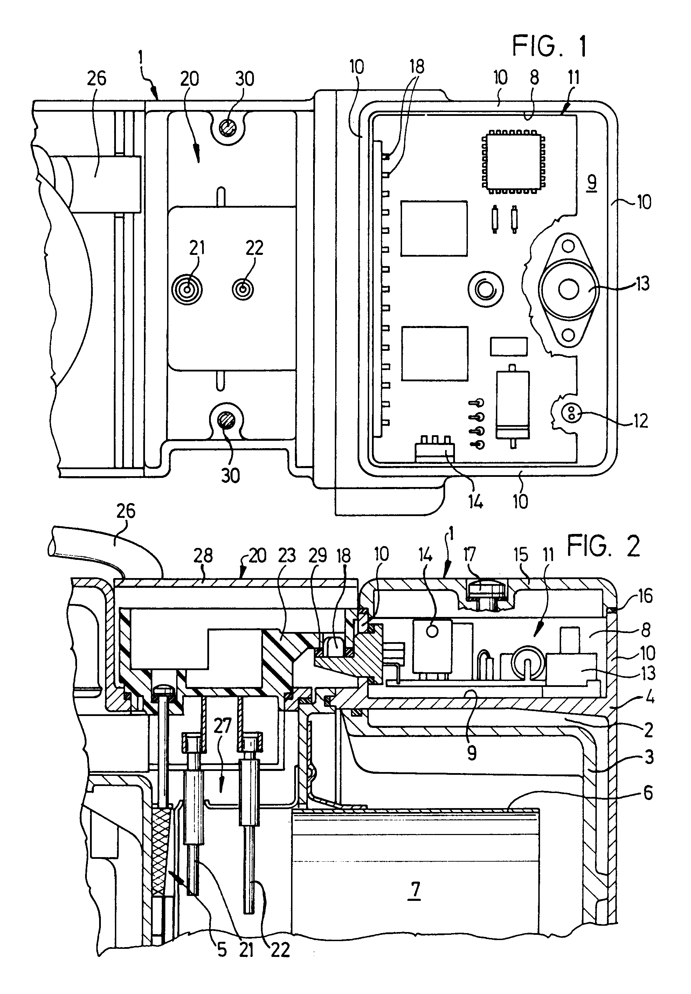

In den Fig. 1 bis 3 ist das Heizgerät insgesamt mit 1 bezeichnet. Als Beispiel ist ein Fahrzeugzusatzheizgerät gezeigt, das mit einem flüssigen Wärmeträger arbeitet. Ein solches Heizgerät ist in den Kühlmittelkreislauf eines Kraftfahrzeugs beispielsweise eingebunden. Der flüssige Wärmeträger durchströmt einen Zwischenraum 2, der zwischen einem Wärmeübertrager 3 und einem mantelförmigen Außengehäuse 4 gebildet wird. Das Heizgerät 1 weist ferner einen schematisch dargestellten Brenner 5 auf, der in eine von einem Brennrohr 6 gebildete Brennkammer 7 ragt. Die Ein- und Auslässe für den flüssigen Wärmeträger sind bei dem Heizgerät 1 nach den Figuren der Zeichnungen nicht dargestellt.

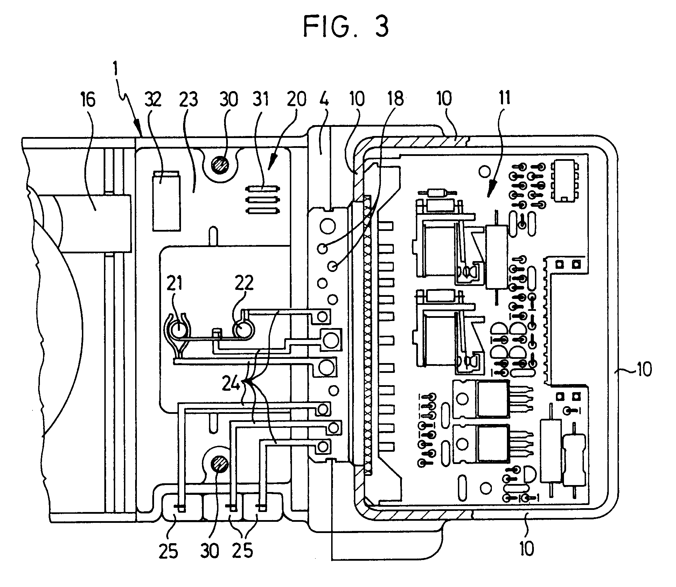

Wie insbesondere aus Fig. 2 zu ersehen ist, ist an der Außenseite des mantelförmigen Außengehäuses 4 ein Aufnahmeraum 8 angeformt, der zweckmäßigerweise am mantelförmigen Außengehäuse 4 angegossen ist, und der durch eine Bodenwand 9 und entsprechende Seitenwände 10 begrenzt ist, die im wesentlichen senkrecht zur Bodenwand 9 verlaufen. In dem Aufnahmeraum 8 ist die insgesamt mit 11 bezeichnete Steuereinrichtung untergebracht. Die Steuereinrichtung 11 umfaßt ein oder mehrere Platinen, die als gedruckte Schaltungsplatten ausgelegt sein können und/oder die mit entsprechenden elektrischen oder elektronischen Bauelementen bestückt sein können. Beispiele hierfür lassen sich insbesondere den Fig. 1 und 3 entnehmen. Ferner umfaßt die Steuereinrichtung 11 als Sensorik mehrere Sensorelemente, die in den Fig. 1 und 2 insbesondere durch Ausschneiden einer der Platinen der Steuereinrichtung 11 verdeutlicht sind. Hierbei handelt es sich beispielsweise um einen Temperatursensor 12 für den im Zwischenraum 2 strömenden flüssigen Wärmeträger und um eine Temperatursicherungseinrichtung 13. Diese Sensorelemente 12, 13 sind an der Bodenwand 9 des Aufnahmeraums 8 angeordnet. In Fig. 1 und 2 ist als Beispiel ein Leistungs-Halbleiterbauelement 14 dargestellt, das beim Betreiben Verlustwärme erzeugt. Selbstverständlich kann die Steuereinrichtung 11 auch noch weitere Leistungs-Halbleiterbauelemente umfassen. Dieses Leistungs-Halbleiterbauelement 14 ist an einer Seitenwand 10 des Aufnahmeraums 8 angeordnet und steht in unmittelbarer wärmeleitender Verbindung mit dieser Seitenwand 10. Hierdurch kann die Verlustwärme des Leistungs-Halbleiterbauelements 14 wirksam zur Umgebung hin abgeführt werden, um eine Aufwärmung des Aufnahmeraums 8 im Betriebszustand des Heizgeräts 1 und der Steuereinrichtung 11 zu vermeiden.

Der von den Seitenwänden 10 und der Bodenwand 9 begrenzte Aufnahmeraum 8 ist nach oben hin durch einen Deckel 15 abgeschlossen, der unter Zwischenlage einer Dichtung 16 auf den Seitenwänden 10 des Aufnahmeraums 8 aufliegt und beispielsweise mit Hilfe wenigstens einer Schraube 17 fest mit der Bodenwand 9 des Aufnahmeraums 8 verbunden ist. Somit ist die Steuereinrichtung 11 vor Umgebungseinflüssen und auch von von außen einwirkenden mechanischen Beanspruchungen wirksam geschützt untergebracht. Durch Lösen der Schraube 17 kann der Deckel 15 abgenommen werden, so daß man einen direkten Zugang zu der Steuereinrichtung 11 im Bedarfsfall hat, um beispielsweise Störungen zu beheben.

Wie ferner aus den Fig. 1 und 2 zu ersehen ist, liegen die Ein-und Ausgänge 18 der Steuereinrichtung 11 zweckmäßigerweise auf einer von einer der Seitenwände 10 des Aufnahmeraums 8 gebildeten Seite, so daß die erforderlichen elektrischen Verbindungen konzentriert auf einer Seite des Aufnahmeraums 8 sich zusammenfassen lassen.

In Verbindung mit den Fig. 2 und 3 der Zeichnung werden nähere Einzelheiten einer insgesamt mit 20 bezeichneten elektrischen Verbindungseinrichtung erläutert. Diese elektrische Verbindungseinrichtung 20 verbindet die Ein- und Ausgänge 18 der Steuereinrichtung 11 mit den jeweils anzusteuernden Funktionsteilen, wie eine Zündeinrichtung 21, eine Flammwächtereinrichtung 22, ein nicht näher dargestelltes Brennluftgebläse, ein ebenfalls nicht näher dargestelltes Magnetventil für die Brennstoffversorgungseinrichtung des Heizgeräts 1, sowie eine nicht dargestellte Umwälzpumpe für den flüssigen Wärmeträger des Heizgeräts 1 usw. Zugleich wird über die elektrische Verbindungseinrichtung 20 auch eine Verbindung zu extern liegenden zu steuernden Einrichtungen sowie mit dem Fahrzeug hergestellt, wenn das Heizgerät 1 in ein Fahrzeug eingebaut ist. Die elektrische Verbindungseinrichtung 20 weist einen steckerähnlichen Grundkörper 23 auf, der zweckmäßigerweise aus Kunststoff hergestellt ist und der beispielsweise einen direkten Steckkontakt mit der Zündeinrichtung 21 und der Flammwächtereinrichtung 22 herstellt. Zur Herstellung der Leitungsverbindung zwischen den Ein- und Ausgängen 18 der Steuereinrichtung 11 sind in den steckerähnlichen Grundkörper 23 elektrische Leiter- und Kontaktteile 24 eingelegt, die vorzugsweise von Metallteilen gebildet werden. Wie insbesondere aus Fig. 3 zu ersehen ist, kontaktieren diese elektrischen Leiter- und Kontaktteile 24 unmittelbar die Ein-und Ausgänge 18 der Steuereinrichtung und stellen die notwendigen elektrischen Verbindungen zu den anzusteuernden wesentlichen Funktionsteilen her. Aus Fig. 3 ist ferner zu ersehen, daß die elektrischen Leiter- und Kontaktteile 24, ausgehend von den Ein- und Ausgängen 18 der Steuereinrichtung 11, direkt zu Anschlußteilen 25 führen, die zweckmäßigerweise als Steckverbindungen ausgelegt sind und an denen dann entsprechend komplementäre Anschlußteile eines Brennluftgebläses, eines Magnetventils, einer Umwälzpumpe o.dgl. angebracht werden können. Wie schematisch aus Fig. 2 zu ersehen ist, geht ein Leitungsstrang 26 von der elektrischen Verbindungseinrichtung 20 ab, über den eine elektrische Verbindung zu dem Fahrzeug und/oder zur extern liegenden Einrichtung, wie ein Fahrzeuggebläse o.dgl., hergestellt wird. Die hierfür benötigten Einzelleitungen sind zu dem Leitungsstrang 26 zusammengefaßt.

Bei der vorstehend erläuterten Ausbildungsform der elektrischen Verbindungseinrichtung 20 hat diese zugleich auch die Aufgabe, die elektrische Verschaltung von Steuereinrichtung 11 und jeweils anzusteuernden Funktionsteilen zu verwirklichen, und zwar auf eine solche Weise, daß möglichst wenige störungsanfällige Einzelleitungen vorhanden sind. Die Verschaltung wird in der elektrischen Verbindungseinrichtung 20 größtenteils mit Hilfe der elektrischen Leiter- und Kontaktteile 24 verwirklicht.

In Achsrichtung des Heizgeräts 1 gesehen, liegt die elektrische Verbindungseinrichtung 20 neben dem Aufnahmeraum 8 für die Steuereinrichtung 11 und zweckmäßigerweise schließt sie sich unmittelbar an diesen Aufnahmeraum 8 an. Hierdurch erhält man möglichst kurze Leitungsverbindungswege sowie eine platzsparende und kompakte Anordnung der Steuereinrichtung 11 und der elektrischen Verbindungseinrichtung 20 an dem Heizgerät 1.

Der steckerähnliche Grundkörper 23 verschließt im eingebauten Zustand eine aus Fig. 2 zu ersehende Zugangsöffnung 27, die zu der Brennkammer 7 offen ist, um im Servicefalle und bei der Montage die Bauteile des Brenners 11 sowie weitere Einrichtungen ein- und/oder ausbauen zu können. Somit übernimmt der steckerähnliche Grundkörper 23 der elektrischen Verbindungseinrichtung 20 auch noch eine zusätzliche weitere Aufgabe.

Nach oben hin ist der steckerähnliche Grundkörper 23, in den die elektrischen Leiter- und Kontaktteile 24 eingelegt sind, mit Hilfe eines Deckels 28 verschlossen, wobei zwischen dem steckerähnlichen Grundkörper 23 und dem Deckel 28 eine Dichtung 29 angeordnet ist, um einen dichten Abschluß zur Umgebung hin zu gewährleisten. Auch werden hierdurch die Einzelheiten der elektrischen Verbindungseinrichtung 20 wirksam vor mechanischen Beschädigungen geschützt. Der Deckel 28 ist zweckmäßigerweise mit Hilfe von zwei Schrauben 30 am mantelförmigen Außengehäuse 4 befestigt. Wenn der Deckel 28 nach Lösen der Schrauben 30 abgenommen wird, sind die elektrischen Leiter- und Kontaktteile 24 im steckerähnlichen Grundkörper 23 zugänglich und es können Überprüfungen und/oder Auswechselungen zu Wartungszwecken vorgenommen werden.

Gegebenenfalls können vom steckerähnlichen Grundkörper 23 Sicherungen 31 sowie Ersatzsicherungen und/oder Bauteile, wie Beispielsweise ein Relais 32 aufgenommen werden, das zur Ansteuerung einer externen Einrichtung, wie einem nicht dargestellten Fahrzeuggebläse dient. Diese Bauteile können in der elektrischen Verbindungseinrichtung 20 elektrisch unter Vermeidung von bisher üblichen Einzelleitungen angeschlossen werden.

Selbstverständlich können die Einzelheiten der elektrischen Verbindungseinrichtung 20 oder der Steuereinrichtung 11 auch getrennt voneinander bei einem Heizgerät 1 verwirklicht werden. Dies bedeutet, daß die elektrische Verbindungseinrichtung 20 auch dann in der dargestellten Weise ausgelegt werden kann, wenn die Steuereinrichtung 11 auf andere Weise als beim dargestellten Beispiel ausgelegt, ausgebildet oder angeordnet ist.

Ähnliches gilt natürlich auch für die Steuereinrichtung 11. Somit sind die vorangehend beschriebenen Einzelheiten nicht auf das anhand der Zeichnung erläuterte Ausführungsbeispiel beschränkt, sondern es können zahlreiche Abänderungen vorgenommen werden, die der Fachmann im Bedarfsfalle treffen wird, ohne die tragenden Grundgedanken der Erfindung zu verlassen. Selbstverständlich erhält man hinsichtlich der Kompaktheit eine speziell günstige Auslegungsform eines Heizgeräts, wenn man entsprechend dem dargestellten Beispiel die Steuereinrichtung 11 und die elektrische Verbindungseinrichtung 20 in kombinatorischer Weise zusammenwirkend auslegt.

### Bezugszeichen

- 1: Heizgerät insgesamt
- 2: Zwischenraum
- 3: Wärmeübertrager
- 4: Mantelförmiges Außengehäuse
- 5: Brenner
- 6: Brennrohr
- 7: Brennkammer
- 8: Aufnahmeraum
- 9: Bodenwand
- 10: Seitenwände
- 11: Steuereinrichtung insgesamt
- 12: Temperatursensor für flüssigen Wärmeträger
- 13: Temperatursicherungseinrichtung
- 14: Leistungs-Halbleiterbauelement
- 15: Deckel
- 16: Dichtung
- 17: Schraube
- 18: Ein- und Ausgänge
- 20: Elektrische Verbindungseinrichtung insgesamt
- 21: Zündeinrichtung
- 22: Flammwächtereinrichtung
- 23: Steckerähnlicher Grundkörper
- 24: Elektrische Leiter- und Kontaktteile
- 25: Anschlußteile (vorn)
- 26: Leitungsstrang, der zu Fahrzeug geht
- 27: Zugangsöffnung zur Brennkammer 7
- 28: Deckel
- 29: Dichtung
- 30: Schrauben
- 31: Sicherungen
- 32: Relais

## Patentansprüche

1. Fahrzeugzusatzheizgerät, bei dem ein Zwischenraum (2) zwischen einem Wärmeübertrager (3) und einem mantelförmigen Außengehäuse (4) von einem flüssigen Wärmeträger durchströmt ist, am Außengehäuse (4) unmittelbar ein Aufnahmeraum (8) mit einer vom mantelförmigen Außengehäuse (4) gebildeten Bodenwand (9) angeformt ist, und eine Steuereinrichtung (11) für die wesentlichen Funktionsteile, wie Brennluftgebläse, Zündeinrichtung, Flammwächter, Magnetventil in der Brennstoffzufuhreinrichtung oder dergleichen vorgesehen ist, die wenigstens eine Platine mit den Schaltungen, welche direkt mit dem Heizgerät verbunden ist, sowie Sensorelemente (12, 13), wie einen Temperaturfühler (12) für den flüssigen Wärmeträger und eine Temperatursicherung (13) oder dergleichen, welche an der Bodenwand (9) des Aufnahmeraums (8) angeordnet sind, und Leistungs-Halbleiterbauelemente (14) umfaßt, welche zur Abfuhr ihrer Verlustwärme in unmittelbarem Wärmekontakt mit den den Aufnahmeraum (8) begrenzenden Wänden angeordnet sind.

2. Fahrzeugzusatzheizgerät nach Anspruch 1, dadurch gekennzeichnet, daß die Oberseite des Aufnahmeraums (8) mittels eines abnehmbaren Deckels (15) dicht abgeschlossen ist.

3. Fahrzeugzusatzheizgerät nach Anspruch 1 oder 2, dadurch gekennzeichnet, daß die Steuereinrichtung (11) Ein- und Ausgänge (18) hat, die auf einer Seite des Aufnahmeraums (8) angeordnet sind.

4. Fahrzeugzusatzheizgerät nach einem der vorangehenden Ansprüche, dadurch gekennzeichnet, daß eine elektrische Verbindungseinrichtung (20) vorgesehen ist, die die Ein- und Ausgänge (18) der Steuereinrichtung (11) mit den jeweils anzusteuernden Funktionsteilen und/oder mit dem Fahrzeug verbindet.

5. Fahrzeugzusatzheizgerät nach Anspruch 4, dadurch gekennzeichnet, daß die elektrische Verbindungseinrichtung (20) einen steckerähnlichen Grundkörper (23) aufweist, der entsprechende elektrische Leiter-und Kontaktteile (24) enthält.

6. Fahrzeugzusatzheizgerät nach Anspruch 5, dadurch gekennzeicnet, daß die elektrischen Leiter- und Kontaktteile (24) eine unmittelbare Verbindung von Ein- und Ausgängen (18) der Steuereinrichtung (11) und den anzusteuernden Funktionsteilen herstellt.

7. Fahrzeugzusatzheizgerät nach Anspruch 5 oder 6, dadurch gekennzeichnet, daß die elektrischen Leiter- und Kontaktteile (24) Metallteile sind.

8. Fahrzeugzusatzheizgerät nach einem der Ansprüche 5 bis 7, dadurch gekennzeichnet, daß der steckerähnliche Grundkörper (23) aus Kunststoff besteht.

9. Fahrzeugzusatzheizgerät nach einem der Ansprüche 5 bis 8, dadurch gekennzeichnet, daß auf dem steckerähnlichen Grundkörper (23) ein Deckel (28) dicht schließend, abnehmbar befestigt ist.

10. Fahrzeugzusatzheizgerät nach einem der Ansprüche 5 bis 9, dadurch gekennzeichnet, daß die elektrischen Leiter- und Kontaktteile (24) in den steckerähnlichen Grundkörper (23) eingelegt sind.

11. Fahrzeugzusatzheizgerät nach einem der Ansprüche 4 bis 10, dadurch gekennzeichnet, daß die elektrische Verbindungseinrichtung (20) in Achsrichtung des Heizgeräts (1) gesehen neben dem Aufnahmeraum (8) für die Steuereinrichtung (11) angeordnet ist.

12. Fahrzeugzusatzheizgerät nach Anspruch 11, dadurch gekennzeichnet, daß die elektrische Verbindungeinrichtung (20) unmittelbar an den Aufnahmeraum (8) anschließt.

13. Fahrzeugzusatzheizgerät nach einem der Ansprüche 4 bis 12, dadurch gekennzeichnet, daß die elektrische Verbindungseinrichtung (20) einen direkten Steckkontakt mit Funktionsteilen, wie der Zündeinrichtung (21), der Flammwächtereinrichtung (22) o. dgl., herstellt.

14. Fahrzeugzusatzheizgerät nach einem der Ansprüche 4 bis 13, dadurch gekennzeichnet, daß die elektrische Verbindungeinrichtung (20) zugleich eine zur Brennkammer (7) des Heizgeräts (1) führende Zugangsöffnung (27) verschließt.

15. Fahrzeugzusatzheizgerät nach einem der Ansprüche 4 bis 14, dadurch gekennzeichnet, daß die elektrische Verbindungeinrichtung (20) Sicherungen (31), gegebenenfalls eine Reservesicherung, und/oder elektrische Bauteile (32) zur Ansteuerung externer Einrichtungen, wie ein Fahrzeuggebläse, o. dgl. enthält.

## Claims

1. A vehicle auxiliary heater in which an intermediate space (2) between a heat exchanger (3) and a jacket-like outer casing (4) is traversed by a liquid heat carrier and on the outer casing (4) of which there is directly formed a mounting space (8) with a bottom wall (9) formed by the jacket-like outer casing (4), and a control device (11) for the essential functioning parts such as combustion air blower, ignition device, flame monitor, magnetic valve in the fuel feed device or the like and which comprises at least one plate with the circuits and which is directly connected to the heater, as well as sensor elements (12, 13) such as a temperature sensor (12) for the liquid heat carrier and a temperature protective device (13) or the like disposed on the bottom wall (9) of the mounting space (8), and semi-conductor power components (14) which in order to dissipate their lost heat, are disposed in direct heat contact with the walls bounding the mounting space (8).

2. A vehicle auxiliary heater according to Claim 1, characterised in that the top of the mounting space is closed in sealing-tight manner by a removable cover (15).

3. A vehicle auxiliary heater according to Claim 1 or 2, characterised in that the control device (11) has inputs and outputs (18) which are disposed on one side of the mounting space (8).

4. A vehicle auxiliary heater according to one of the preceding Claims, characterised in that an electrical connection device (20) is provided which links the inputs and outputs (18) of the control device (11) with the vehicle and/or with whichever functional parts have to be controlled.

5. A vehicle auxiliary heater according to Claim 4, characterised in that the electrical connection device (20) comprises a plug-like base (23) containing corresponding electrical conductor and contact parts (24).

6. A vehicle auxiliary heater according to Claim 5, characterised in that the electrical conductor and contact parts (24) establishes a direct connection between inputs and outputs (18) of the control device (11) and the functional parts which have to be controlled.

7. A vehicle auxiliary heater according to Claim 5 or 6, characterised in that the electrical conductor and contact parts (24) are metal parts.

8. A vehicle auxiliary heater according to one of Claims 5 to 7, characterised in that the plug-like base (23) consists of a synthetic plastics material.

9. A vehicle auxiliary heater according to one of Claims 5 to 8, characterised in that a cover (28) is removably fitted in sealing-tight manner on the plug-like base (23).

10. A vehicle auxiliary heater according to one of Claims 5 to 9, characterised in that the electrical conductor and contact parts (24) are embedded in the plug-like base (23).

11. A vehicle auxiliary heater according to one of Claims 4 to 10, characterised in that the electrical connection device (20) is disposed beside the mounting space (8) for the control device (11) when viewed in the axial direction of the heater (1).

12. A vehicle auxiliary heater according to Claim 11, characterised in that the electrical connection device (20) is directly adjacent the mounting space (8).

13. A vehicle auxiliary heater according to one of Claims 4 to 12, characterised in that the electrical connection device (20) establishes direct plugged-in contact with functional parts such as the ignition device (21), the flame monitor (22) or the like.

14. A vehicle auxiliary heater according to one of Claims 4 to 13, characterised in that the electrical connection device (20) at the same time closes an access aperture (27) leading to the combustion chamber (7) of the heater (1).

15. A vehicle auxiliary heater according to one of Claims 4 to 14, characterised in that the electrical connection device (20) contains fuses (31), possibly a spare fuse and/or electrical components (32) to actuate external devices such as a vehicle fan or the like.

## Revendications

1. Appareil de chauffage d'appoint pour véhicule, dans lequel un espace intermédiaire (2) entre un échangeur de chaleur (3) et un carter extérieur en forme d'enveloppe (4) est parcouru par un agent caloporteur liquide, un réceptacle (8) est directement formé sur le carter extérieur (4) avec une paroi de fond (9) constituée par le carter extérieur (4) en forme d'enveloppe, et il est prévu un dispositif de commande (11) pour les parties fonctionnelles essentielles, telles que la soufflerie d'air de combustion, le dispositif d'allumage, la veilleuse à flamme, l'électro-vanne dans le dispositif d'alimentation en combustible ou analogues, qui comprend au moins une platine avec des câblages, qui est reliée directement à l'appareil de chauffage, ainsi que des éléments capteurs (12, 13), tels qu'un détecteur de température (12) pour l'agent caloporteur fluide et un dispositif de protection thermique (13) ou analogue, qui sont disposés sur la paroi de fond (9) du réceptacle (8) et des éléments semi-conducteurs de puissance (14), qui pour l'évacuation de la chaleur qu'ils perdent, sont directement disposés en contact thermique avec les parois délimitant le réceptacle (8).

2. Appareil de chauffage d'appoint pour véhicule selon la revendication 1, caractérisé en ce que le côté supérieur du réceptacle (8) est fermé de façon étanche au moyen d'un couvercle (15) que l'on peut enlever.

3. Appareil de chauffage d'appoint pour véhicule selon la revendication 1 ou 2, caractérisé en ce que le dispositif de commande (11) a des entrées et des sorties (18) qui sont disposées sur le côté du réceptacle (8).

4. Appareil de chauffage d'appoint pour véhicule selon l'une des revendications précédentes, caractérisé en ce qu'un dispositif de liaison électrique (29) est prévu, dispositif qui relie les entrées et les sorties (18) du dispositif de commande (11) aux pièces fonctionnelles respectives à commander et/ou au véhicule.

5. Appareil de chauffage d'appoint selon la revendication 4, caractérisé en ce que le dispositif de liaison électrique (20) présente un corps de base (23) analogue à un connecteur, qui contient les pièces électriques correspondantes de conduction et de contact (24).

6. Dispositif de chauffage d'appoint selon la revendication 5, caractérisé en ce que les pièces électriques de conduction et de contact (24) établissent une liaison directe à partir des entrées et sorties (18) du dispositif de commande (11) et des éléments fonctionnels à commander.

7. Dispositif de chauffage d'appoint pour véhicule selon la revendication 5 ou 6, caractérisé en ce que les pièces électriques de conduction de contact (24) sont des pièces métalliques.

8. Dispositif de chauffage d'appoint pour véhicule selon l'une des revendications 5 à 7, caractérisé en ce que le corps de base (23) analogue à un connecteur est en matière plastique.

9. Dispositif de chauffage d'appoint pour véhicule selon l'une des revendications 5 à 8, caractérisé en ce que le corps de base (23) analogue à un connecteur est fixé un couvercle (28) fermant de façon étanche et qui peut être enlevé.

10. Dispositif de chauffage d'appoint pour véhicule selon l'une des revendications 5 à 9, caractérisé en ce que les pièces électriques de conduction et de contact (24) sont insérées dans le corps de base (23) analogue à un connecteur.

11. Dispositif de chauffage d'appoint pour véhicule selon l'une des revendications 4 à 10, caractérisé en ce que le dispositif électrique de liaison (20), vu dans le sens axial de l'appareil de chauffage (8) est disposé à côté du réceptacle (8) du dispositif de commande (11).

12. Dispositif de chauffage d'appoint pour véhicule selon la revendication 11, caractérisé en ce que le dispositif électrique de liaison (20) est directement raccordé au réceptacle (8).

13. Dispositif de chauffage d'appoint pour véhicule selon l'une des revendications 4 à 12, caractérisé en ce que le dispositif électrique de liaison (20) établit un contact à fiche direct avec les éléments fonctionnels, tels que le dispositif d'allumage (21) le dispositif de veilleuse à flamme (22) ou analogue.

14. Dispositif de chauffage d'appoint pour véhicule selon l'une des revendications 4 à 13, caractérisé en ce que le dispositif de liaison électrique (20) ferme en même temps une ouverture d'accès (27) conduisant à la chambre de combustion (7) de l'appareil de chauffage (1).

15. Appareil de chauffage d'appoint pour véhicule selon l'une des revendications 4 à 14, caractérisé en ce que le dispositif électrique de liaison (20) contient des fusibles (31), le cas échéant un fusible de réserve et/ou des pièces électriques (32) pour commander des dispositifs extérieurs, tels qu'un ventilateur de véhicule ou analogue.
